(19) Europäisches Patentamt
European Patent Office
Office européen des brevets

(11) **EP 1 221 848 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(21) Anmeldenummer: **00964190.3**

(22) Anmeldetag: **18.09.2000**

(51) Int Cl.:
*A01N 43/653* *(2006.01)*    *A01N 25/32* *(2006.01)*

(86) Internationale Anmeldenummer:
**PCT/EP2000/009089**

(87) Internationale Veröffentlichungsnummer:
**WO 2001/022819 (05.04.2001 Gazette 2001/14)**

(54) **SELEKTIVE HERBIZIDE AUF BASIS EINES N-ARYL-TRIAZOLINONS**

SELECTIVE HERBICIDES ON THE BASIS A N-ARYL-TRIAZOLINEONE

HERBICIDES SELECTIFS A BASE D'UN N-ARYLE-TRIAZOLINEONE

(84) Benannte Vertragsstaaten:
**AT BE CH CY DE DK ES FI FR GB GR IE IT LI LU MC NL PT SE**

(30) Priorität: **30.09.1999 DE 19946855**
**22.12.1999 DE 19962017**

(43) Veröffentlichungstag der Anmeldung:
**17.07.2002 Patentblatt 2002/29**

(73) Patentinhaber: **Bayer CropScience AG**
**40789 Monheim (DE)**

(72) Erfinder:
• **FEUCHT, Dieter**
**40789 Monheim (DE)**
• **DREWES, Mark Wilhelm**
**40764 Langenfeld (DE)**
• **DAHMEN, Peter**
**41470 Neuss (DE)**
• **KRAUSKOPF, Birgit**
**Leawood, KS 66224 (US)**
• **KREMER, Mathias**
**51399 Burscheid (DE)**
• **PONTZEN, Rolf**
**42799 Leichlingen (DE)**
• **WELLMANN, Arndt**
**51519 Odenthal (DE)**
• **HAAS, Wilhelm**
**50259 Pulheim (DE)**

(56) Entgegenhaltungen:
EP-A- 0 112 799    EP-A- 0 609 734
EP-A- 0 931 456    WO-A-00/08934
WO-A-94/09629    WO-A-96/03878
WO-A-98/12923    WO-A-99/51099
DE-A- 19 610 786   DE-A- 19 635 060
DE-A- 19 635 074   DE-A- 19 802 697
US-A- 4 909 831    US-H- H1 711

• DATABASE CROPU [Online] Derwent Publication Ltd. ; 1997 OWEN M D K ET AL: "Evaluation of BAY FOE 5043, sulfentrazone, and AC 299,263 for weed control in soybeans, Crawfordsville, Iowa, 1996." retrieved from STN Database accession no. 1997-88900 XP002159116 & RES.REP.NORTH CENT.WEED SCI.SOC. (53, 389, 1996) 1 TAB., Univ.Iowa-State
• BRITISH CROP PROTECTION COUNCIL: "THE PESTICIDE MANUAL, TENTH EDITION" , PESTICIDE MANUAL,GB,FARNHAM,BCPC,VOL. ED. 10, PAGE(S) 1335-1341 XP002031460 ISBN: 0-948404-79-5 der Index, soweit er sich auf Herbizide bezieht

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft neue herbizide, synergistische Wirkstoffkombinationen, die ein bekanntes N-Aryl-triazolinon einerseits und bekannte herbizid wirksame Verbindungen und/oder die Kulturpflanzen-Verträglichkeit verbessernde Verbindungen andererseits umfassen und mit besonders gutem Erfolg zur selektiven Unkrautbekämpfung in verschiedenen Nutzpflanzenkulturen verwendet werden können.

N-Aryl-triazolin(thi)one sind als herbizid wirksame Stoffe Gegenstand einer Reihe von Patentanmeldungen (vgl. DE-A-3024316, DE-A-3514057, DE-A-3636318, EP-A-220952, EP-A-370332, EP-A-597360, EP-A-609734, US-A-4702763, US-A-4806145, US-A-4818275, US-A-4906284, US-A-4909831, US-A-5035740, US-A-5041155, WO-A-85/01637, WO-A-85/04307, WO-A-86/02642, WO-A-86/04481, WO-A-87/00730, WO-A-87/03782, WO-A-88/09617, WO-A-90/02120, WO-A-95/30661, WO-A-99/37153). Die bekannten N-Aryl-triazolin(thi)one weisen jedoch eine Reihe von Wirkungslücken auf.

Überraschenderweise wurde nun gefunden, dass der Wirkstoff 2-(4-Thiocarbamoyl-2-fluor-5-ethylsulfonylamino-phenyl)-4-methyl-5-trifluormethyl-2,4-dihydro-3H-1,2,4-triazol-3-on bei gemeinsamer Anwendung mit bekannten herbizid wirksamen Sulfonylharnstoff-Verbindungen synergistische Effekte hinsichtlich der Wirkung gegen Unkräuter zeigt und besonders vorteilhaft als breit wirksames Kombinationspräparat zur selektiven Bekämpfung von Unkräutern in Nutzpflanzenkulturen, wie z.B. in Baumwolle, Gerste, Kartoffeln, Mais, Reis, Soja, Sonnenblumen, Weizen und Zuckerrohr verwendet werden kann.

Gegenstand der Erfindung sind selektiv-herbizide Mittel, gekennzeichnet durch einen wirksamen Gehalt an einer Wirkstofflcombination umfassend

    (a) den Wirkstoff 2-(4-Thiocarbamoyl-2-fluor-5-ethylsulfonylamino-phenyl)-4-methyl-5-trifluormethyl-2,4-dihydro-3H-1,2,4-triazol-3-on
    und

    (b) zumindest ein Herbizid aus der Wirkstoffklasse der Sulfonylharnstoffe
    sowie gegebenenfalls

    (c) zumindest eine die Kulturpflanzen-Verträglichkeit verbessernde Verbindung aus der folgenden Gruppe von Verbindungen:

α-(1,3-Dioxolan-2-yl-methoximino)-phenylacetonitril (Oxabetrinil), α-(Cyano-methoximino)-phenylacetonitril (Cyometrinil), 4-Chlor-N-(1,3-dioxolan-2-yl-methoxy)-α-trifluor-acetophenonoxim (Fluxofenim), 4,6-Dichlor-2-phenyl-pyrimidin (Fenclorim), 4-Dichloracetyl-3,4-dihydro-3-methyl-2H-1,4-benzoxazin (Benoxacor), 5-Chlor-chinoxalin-8-oxy-essigsäure-(1-methyl-hexylester) (Cloquintocet), 2,2-Dichlor-N-(2-oxo-2-(2-propenylamino)-ethyl)-N-(2-propenyl)-acetamid (DKA-24), 1,8-Naphthalsäureanhydrid, 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 3-Dichloracetyl-5-(2-furanyl)-2,2-dimethyl-oxazolidin (Furilazole, MON-13900), 4-Dichloracetyl-1-oxa-4-azaspiro[4.5]-decan (AD-67), 2-Dichlormethyl-2-methyl-1,3-dioxolan (MG-191), 2,2-Dichlor-N-(1,3-dioxolan-2-yl-methyl)-N-(2-propenyl)-acetamid (PPG-1292), 2,2-Di chlor-N,N-di-2-propenyl-acetamid (Dichlormid), N-(4-Methyl-phenyl)-N'-(1-methyl-1-phenyl-ethyl)-harnstoff (Dymron), 1-Dichloracetyl-hexahydro-3,3,8a-trimethylpyrrolo[1,2-a]-pyrimidin-6(2H)-on (BAS-145138), N-(2-Methoxy-benzoyl)-4-(methylaminocarbonylamino)-benzolsulfonamid, Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl) und 2,4-Dichlorphenoxyessigsäure (2,4-D) und dessen Derivate.

Gegenstand der Erfindung sind insbesondere selektiv-herbizide Mittel, gekennzeichnet durch einen wirksamen Gehalt an einer Wirkstoffkombination umfassend

    (a) den Wirkstoff 2-(4-Thiocarbamoyl-2-fluor-5-ethylsulfonylamino-phenyl)-4-methyl-5-trifluormethyl-2,4-dihydro-3H-1,2,4-triazol-3-on
    ("Verbindung der Formel (I)"),
    und

    (b) zumindest eine Verbindung aus einer zweiten Gruppe von Herbiziden, welche die nachstehend genannten Wirkstoffe enthält:

N-(4,6-Dimethoxy-pyrimidin-2-yl)-N'-(N-methyl-N-methylsulfonyl-sulfamoyl)-harnstoff (Amidosulfuron), N-(4,6-Dimethoxy-pyrimidin-2-yl)-N'-[1-methyl-4-(2-methyl-2H-tetrazol-5-yl)-1H-pyrazol-5-ylsulfonyl]-harnstoff (Azimsulfuron), N-(4,6-Dimethoxy-pyrimidin-2-yl)-N'-(2-methoxycarbonyl-phenylmethylsulfonyl)-harnstoff (Bensulfuron), N-(4-Chlor-6-methoxy-pyrimidin-2-yl)-N'-(2-ethoxycarbonyl-phenylsulfonyl)-harnstoff (Chlorimuron-ethyl), N-(4-Methoxy-6-methyl-1,3,5-triazin-2-yl)-N'-(2-chlor-phenylsulfonyl)-harnstoff (Chlorsulfuron), N-(4,6-Dimethoxy-1,3,5-triazin-2-yl)-N'-(2-(2-methoxy-ethoxy)-phenylsulfonyl)-harnstoff (Cinosulfuron), N-(4,6-Dimethoxy-pyrimidin-2-yl)-N'-(2-cyclopropylcarbonyl-phenylsulfonyl)-harnstoff (Cyclosulfamuron), N-(4,6-Dimethoxy-pyrimidin-2-yl)-N'-(2-ethoxy-phenoxysulfonyl)-harnstoff (Ethoxysulfuron), N-(4,6-Dimethoxy-pyrirnidin-2-yl)-N'-(3-methoxycarbonyl-6-trifluormethyl-pyridin-2-yl-sulfonyl)-harnstoff Natriumsalz (Flupyrsulfuron-methyl-sodium), N-(4,6-Dimethoxy-pyrimidin-2-yl)-N'-(3-chlor-4-methoxycarbonyl-1-methyl-pyrazol-5-yl-sulfonyl)-harnstoff (Halosulfuron-methyl), N-(4,6-Dimethoxy-pyrimidin-2-yl)-N-(2-chlor-imidazo[1,2-a]-pyridin-3-yl-sulfonyl)-harnstoff (Imazosulfuron), N-(4-Methoxy-6-methyl-1,3,5-triazin-2-yl)-N'-(5-iod-2-methoxycarbonyl-phenylsulfonyl)-harnstoff-Natriumsalz (Iodosulfuron-methyl-sodium), N-(4-Methoxy-6-methyl-1,3,5-triazin-2-yl)-N'-(2-methoxycarbonyl-phenylsulfonyl)-harnstoff (Metsulfuron-methyl), N-(4,6-Dimethoxy-pyrimidin-2-yl)-N'-(3-dimethylcarbamoyl-pyridin-2-yl-sul fonyl)-harnstoff (Nicosulfuron), N-(4,6-Dimethyl-pyrimidin-2-yl)-N'-(2-oxetan-3-yl-oxycarbonyl-phenylsulfonyl)-harnstoff (Oxasulfuron), N-(4,6-Bis-difluormethoxy-pynmidin-2-yl)-N'-(2-methoxycarbonylphenylsulfonyl)-harnstoff (Primisulfuron-methyl), N-(4-Methoxy-6-methyl-1,3,5-triazin-2-yl)-N'-(2-(3,3,3-trifluor-propyl)-phenylsulfonyl)-harnstoff (Prosulfuron), N-(4,6-Dimethoxy-pyrimidin-2-yl)-N'-(4-ethoxycarbonyl-1-methyl-pyrazol-5-yl-sulfonyl)-hamstoff (Pyrazosulfuron-ethyl), N-(4,6-Dimethoxy-pyrimidin-2-yl)-N'-(3-ethylsulfonyl-pyridin-2-yl-sulfonyl)-harnstoff (Rimsulfuron), N-(4,6-Dimethoxypyrimidin-2-yl)-N'-(2-ethylsulfonyl-imidazo[1,2-a]pyridin-3-sulfonamid (Sulfosulfuron), N-(4-Methoxy-6-methyl-1,3,5-triazin-2-yl)-N'-(2-methoxycarbonyl-thien-3-yl-sulfonyl)-harnstoff (Thifensulfuron-methyl), N-(4-Methoxy-6-methyl-1,3,5-triazin-2-yl)-N'-[2-(2-chlor-ethoxy)-phenylsulfonyl]-harnstoff (Triasulfuron), N-Methyl-N-(4-methoxy-6-methyl-1,3,5-triazin-2-yl)-N'-(2-methoxycarbonyl-phenylsulfonyl)-harnstoff (Tribenuron-methyl), N-[4-Dimethylamino-6-(2,2,2-trifluor-ethoxy)-1,3,5-triazin-2-yl]-N'-(2-methoxycarbonyl-phenylsulfonyl)-harnstoff (Triflusulfuron-methyl), N-(4-Methoxy-6-trifluormethoxy-1,3,5-triazin-2-yl)-N'-(2-trifluormethylphenylsulfonyl)-harnstoff (Tritosulfuron), Benzoesäure-2-[[[[(4,6-Dimethoxy-2-pyrimidinyl)-amino]carbonyl]amino]sulfonyl]-4-[[(methylsulfonyl)amino]methyl]-, methylester (DE-A 43 35 297) ("Wirkstoffe der Gruppe 2"),
sowie gegebenenfalls

(c) zumindest eine die Kulturpflanzen-Verträglichkeit verbessernde Verbindung aus der folgenden Gruppe von Verbindungen:

α-(1,3-Dioxolan-2-yl-methoximino)-phenylacet onitril (Oxabetrinil), α-(Cyanomethoximino)-phenylacetonitril (Cyometrinil), 4-Chlor-N-(1,3-dioxolan-2-yl-methoxy)-α-trifluor-acetophenonoxim (Fluxofenim), 4,6-Dichlor-2-phenyl-pyrimidin (Fenclorim), 4-Dichloracetyl-3,4-dihydro-3-methyl-2H-1,4-benzoxazin (Benoxacor), 5-Chlor-chinoxalin-8-oxy-essigsäure-(1-methyl-hexylester) (Cloquintocet), 2,2-Dichlor-N-(2-oxo-2-(2-propenylamino)-ethyl)-N-(2-propenyl)-acetamid (DKA-24), 1,8-Naphthalsäureanhydrid, 1-(2,4-Dichlor-phenyl)-5-trichlomethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 3-Dichloracetyl-5-(2-furanyl)-2,2-dimethyl-oxazolidin (Furilazole, MON-13900), 4-Dichloracetyl-1-oxa-4-azaspiro[4.5]-decan (AD-67), 2-Dichlormethyl-2-methyl-1,3-dioxolan (MG-191), 2,2-Dichlor-N-(1,3-dioxolan-2-yl-methyl)-N-(2-propenyl)-acetamid (PPG-1292), 2,2-Dichlor-N,N-di-2-propenyl-acetamid (Dichlormid), N-(4-Methyl-phenyl)-N'-(1-methyl-1-phenyl-ethyl)-harnstoff (Dymron), 1-Dichloracetyl-hexahydro-3,3,8a-trimethylpyrrolo[1,2-a]-pyrimidin-6(2H)-on (BAS-145138), N-(2-Methoxy-benzoyl)-4-(methylaminocarbonylamino)-benzolsulfonamid, Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl) und 2,4-Dichlorphenoxyessigsäure (2,4-D) und dessen Derivate ("Wirkstoffe der Gruppe 3").

Die Verbindung 2-(4-Thiocarbamoyl-2-fluor-5-ethylsulfonylamino-phenyl)-4-methyl-5-trifluormethyl-2,4-dihydro-3H-1,2,4-triazol-3-on (I-1) wird nach Chem. Abstracts auch als 4-[4,5-Dihydro-4-methyl-5-oxo-(3-trifluorméthyl)-1H-1,2,4-triazol-1-yl]-2-[(ethylsulfonyl)-amino]-5-fluor-benzolcarbothioamid bezeichnet (CAS-Reg.-Nr.: 173980-17-1).

Die Verbindung der Formel (I) ist in den vorstehend zu den N-Aryl-triazolin(thi)onen angegebenen Patentanmeldungen bzw. Patentschriften beschrieben.

Die Wirkstoffe der Gruppe 2 können ihrer chemischen Struktur entsprechend der folgenden Wirkstoffklasse zugeordnet werden:

Sulfonylharnstoffe (z.B. Amidosulfuron, Azimsulfuron, Bensulfuron-methyl, Chlorimuron-ethyl, Chlorsulfuron, Cinosulfuron, Cyclosulfamuron, Ethoxysulfuron, Flupyrsulfuron-methyl-sodium, Halosulfuron-methyl, Imazosulfuron, Metsulfuron-methyl, Nicosulfuron, Oxasulfuron, Primisulfuron-methyl, Prosulfuron, Pyrazosulfuron-ethyl, Rimsulfuron, Sulfosulftron, Thifensulfuron-methyl, Triasulfuron, Tribenuron-methyl, Triflusulfuron-methyl).

Als Mischungskomponenten aus den Wirkstoffen der Gruppe 2 werden besonders hervorgehoben:

Chlorimuron-ethyl, Flupyrsulfuron-methyl-sodium, Iodosulfuron-methyl-sodium, Metsulfuron-methyl, Nicosulfuron, Rimsulfuron, Sulfosulfuron, Thifensulfuron-methyl, Tribenuron-methyl.

Bevorzugt enthalten die erfindungsgemäßen Mittel ein bis drei Wirkstoffe der Gruppe 2.

Es wurde nun überraschend gefunden, dass die vorstehend definierten Wirkstoffkombinationen aus dem N-Aryl-triazolinon der Formel (I) und den vorstehend angeführten Wirkstoffen der Gruppe 2 bei sehr guter Nutzpflanzen-Verträglichkeit eine besonders hohe herbizide Wirksamkeit aufweisen und in verschiedenen Kulturen, insbesondere in Gerste, Mais, Reis und Weizen, zur selektiven Unkrautbekämpfung verwendet werden können.

Überraschenderweise ist die herbizide Wirksamkeit der erfindungsgemäßen Wirkstoffkombinationen aus der Verbindung der Formel (I) und den Verbindungen der oben aufgeführten Gruppe 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Selektivherbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,01 bis 1000 Gewichtsteile, vorzugsweise 0,02 bis 500 Gewichtsteile und besonders bevorzugt 0,05 bis 100 Gewichtsteile Wirkstoff der Gruppe 2.

Als Mischungskomponenten aus den Wirkstoffen der Gruppe 3 werden besonders hervorgehoben:

5-Chlor-chinoxalin-8-oxy-essigsäure-(1-methylhexylester) (Cloquintocet), 1-(2,4-Dichlor-phenyl)-5-trichlormethyl-1H-1,2,4-triazol-3-carbonsäure-ethylester (Fenchlorazol-ethyl), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl) und 2,4-Dichlorphenoxy-essigsäure (2,4-D) und dessen Derivate.

Es wurde überraschend gefunden, dass die oben definierten Wirkstoffkombinationen aus N-Aryl-triazolinon der Formel (I) bzw. dessen Salze und einem Safener/Antidot ("Wirkstoffe der Gruppe 3") in Kombination mit einem oder mehreren der oben angeführten Wirkstoffe der Gruppe 2 bei sehr guter Nutzpflanzen-Verträglichkeit eine besonders hohe herbizide Wirksamkeit aufweisen und in verschiedenen Kulturen, insbesondere in Gerste, Mais, Reis und Weizen zur selektiven Unkrautbekämpfung verwendet werden können.

Überraschenderweise wurde zudem gefunden, dass auch die herbizidwirksame Substanz 2,4-Dichlorphenoxy-essigsäure (2,4-D) und ihre Derivate die oben beschriebene Safeneraufgabe übernehmen können.

Eine bevorzugte Ausführungsform ist daher auch eine Mischung enthaltend die Verbindung der Formel (I) und/oder deren Salze einerseits und 2,4-D und/oder dessen Derivate andererseits, gegebenenfalls in Kombination mit einem oder mehreren der oben angeführten Wirkstoffe der Gruppe 2. Typische Derivate von 2,4-D sind z.B. deren Ester.

Die Verbindungen Diethyl-1-(2,4-dichlorophenyl)-4,5-dihydro-5-methyl-1H-pyrazole-3,5-dicarboxylate (Mefenpyr-diethyl), (1-methylhexyl)-[(5-chloro-8-quinolinyl)oxy]-acetate (Cloquintocet-mexyl) und Ethyl-1-(2,4-dichlorophenyl)-5-(trichloromethyl)-1H-1,2,4-triazole-3-carboxylate (Fenchlorazole-ethyl) sind in den folgenden Patentanmeldungen beschrieben: DE-A-39 39 503, EP-A-191 736 bzw. DE-A-35 25 205. 2,4-D ist ein bekanntes Herbizid.

Dabei ist es als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Wirkstoffe der Gruppe 3 geeignet sind, die schädigende Wirkung der Verbindung der Formel (I) und deren Salzen, gegebenenfalls auch in Kombination mit einem oder mehreren der oben angeführten Wirkstoffe der Gruppe 2, auf die Kulturpflanzen annähernd vollständig aufzuheben, ohne dabei die herbizide Wirksamkeit gegenüber den Unkräutern zu beeinträchtigen.

Hervorgehoben sei hierbei die besonders vorteilhafte Wirkung der besonders bevorzugten Kombinationspartner aus der Gruppe 3, insbesondere hinsichtlich der Schonung von Getreidepflanzen, wie z.B. Weizen, Gerste und Roggen.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (1), seinen Salzen oder dessen Mischungen mit Wirkstoffen der Gruppe 2 0,001 bis 1000 Gewichtsteile, vorzugsweise 0,01 bis 100 Gewichtsteile und besonders bevorzugt 0,1 bis 10 Gewichtsteile einer der oben unter (c) genannten, die Kulturpflanzen Verträglichkeit verbessernden Verbindungen (Antidots/Safener).

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhiozome aufgeführt werden. Zu den Pflanzenteilen gehört auch vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. 4-HPPD-, EPSP- und/oder PPO-Hemmstoffe tolerieren, wie z.B. Acuron-Pflanzen.

Die erfindungsgemäßen Wirkstoffkombinationen können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita.

Monokotyle Unkräuter der Gattungen: Echinochloa, Setaria, Panicurn, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera, Phalaris.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelforrnulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Oleo DuPont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung fiir eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

Wenn

X =   % Schädigung durch Herbizid A (Wirkstoff der Formel I) bei p kg/ha Aufwandmenge

und

Y =   % Schädigung durch Herbizid B (Wirkstoff der Formel II) bei q kg/ha Aufwandmenge

und

E =   die erwartete Schädigung der Herbizide A und B bei p und q kg/ha Aufwandmenge,

dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

## Patentansprüche

1.   Mittel, **gekennzeichnet durch** einen wirksamen Gehalt an einer Wirkstoffkombination umfassend

> (a)   den Wirkstoff 2-(4-Thiocarbamoyl-2-fluor-5-ethylsulfonylaminophenyl)-4-methyl-5-trifluormethyl-2,4-dihydro-3H-1,2,4-tiiazol-3-on
> und
> (b)   zumindest ein Herbizid aus der Wirkstoffklasse der Sulfonylharnstoffe
> sowie gegebenenfalls
> (c)   zumindest eine die Kulturpflanzen-Verträglichkeit verbessernde Verbindung aus der folgenden Gruppe von Verbindungen:

α-(1,3-Dioxolan-2-yl-methoximino)-phenylacetonitril (Oxabetrinil), α-(Cyanomethoximino)-phenylacetonitril (Cyometrinil), 4-Chlor-N-(1,3-dioxolan-2-yl-methoxy)-α-trifluor-acetophenonoxim (Fluxofenim), 4,6-Dichlor-2-phenylpyrimidin (Fenclorim), 4-Dichloracetyl-3,4-dihydro-3-methyl-2H-1,4-benzoxazin (Benoxacor), 5-Chlor-chinoxalin-8-oxy-essigsäure-(1-methyl-hexylester) (Cloquintocet), 2,2-Dichlor-N-(2-oxo-2-(2-propenylamino)-ethyl)-N-(2-propenyl)-acetamid (DKA-24), 1,8-Naphthalsäureanhydrid, 1-(2,4-Dichlor-phenyl)-5-trichlormethyl-1H-1,2,4-triazol-3-carbonsäure-ethylester (Fenchlorazol-ethyl), 2-Chlor-4-trifluonnethyl-thiazol-5-carbonsäure-phenylmethylester (Flurazole), 3-Dichloracetyl-5-(2-furanyl)-2,2-dimethyl-oxazolidin (Furilazole, MON-13900), 4-Dichloracetyl-1-oxa-4-aza-spiro[4.5]-decan (AD-67), 2-Dichlormethyl-2-methyl-1,3-dioxolan (MG-191), 2,2-Dichlor-N-(1,3-dioxolan-2-yl-methyl)-N-(2-propenyl)-acetamid (PPG-1292), 2,2-Di chlor-N,N-di-2-propenyl-acetamid (Dichlormid), N-(4-Methyl-phenyl)-N'-(1-methyl-1-phenyl-ethyl)-harnstoff (Dymron), 1-Dichloracetyl-hexahydro-3,3,8a-trimethylpyrrolo[1,2-a]-pyrimidin-6(2H)-on (BAS-145138), N-(2-Methoxy-benzoyl)-4-(methylaminocarbonylamino)-benzolsulfonamid, Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl) und 2,4-Dichlorphenoxyessigsäure (2,4-D) und dessen Derivate.

2.   Mittel gemäß Anspruch 1, **dadurch gekennzeichnet, dass** das Herbizid aus der Wirkstoffklasse der Sulfonylharnstoffe Amidosulfuron, Azimsulfuron, Bensulfuron-methyl, Chlorimuron-ethyl, Chlorsulfuron, Cinosulfuron, Cyclosulfamuron, Ethoxysulfuron, Flupyrsulfuron-methyl-sodium, Halosulfuron-methyl, Imazosulfuron, Metsulfuron-methyl, Nicosulfuron, Oxasulfuron, Primisulfuron-methyl, Prosulfuron, Pyrazosulfuron-ethyl, Rimsulfuron, Sulfosulfuron, Thifensulfuron-methyl, Triasulfuron, Tribenuron-methyl oder Triflusulfuron-methyl ist.

3. Mittel gemäß Anspruch 1 oder 2, **dadurch gekennzeichnet, dass** die Kulturpflanzen-Verträglichkeit verbessernde Verbindung ausgewählt ist aus 5-Chlor-chinoxalin-8-oxy-essigsäure-(1-methylhexylester) (Cloquintocet), 1-(2,4-Dichlor-phenyl)-5-trichlormethyl-1H-1,2,4-triazol-3-carbonsäure-ethylester (Fenchlorazol-ethyl), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl) und 2,4-Dichlorphenoxyessigsäure (2,4-D) und dessen Derivate.

4. Mittel gemäß einem der Ansprüche 1 bis 3, **dadurch gekennzeichnet, dass** auf den Wirkstoff (a) 0,01 bis 1000 Gewichtsteile, vorzugsweise 0,02 bis 500 Gewichtsteile, besonders bevorzugt 0,05 bis 100 Gewichtsteile Herbizid (b) entfallen.

5. Verwendung eines Mittels gemäß einem der Ansprüche 1 bis 3 zum Bekämpfen von unerwünschten Pflanzen.


**Revendications**

1. Agent, **caractérisé par** une teneur efficace en une combinaison de substances actives comprenant

(a) la substance active 2-(4-thiocarbamoyle-2-fluor-5-éthylsulfonylamino-phényle)-4-méthyle-5-trifluorométhyle-2,4-dihydro-3H-1,2,4-triazol-3-one et

(b) au moins un herbicide de la classe de substances actives des sulfonylurées, ainsi que le cas échéant

(c) au moins un composé améliorant la compatibilité avec les plantes cultivées du groupe suivant de composés:

$\alpha$-(1,3-dioxolane-2-yle-méthoximino)-phénylacétonitrile (oxabetrinil), $\alpha$-(cyanométhoximino)-phénylacétonitrile (cyométrinile), 4-chloro-N-(1,3-dioxolane-2-yle-méthoxy)-$\alpha$-trifluoro-acétophénonoxime (fluxofenim), 4,6-dichloro-2-phényle-pyrimidine (fenclorim), 4-dichloracétyle-3,4-dihydro-3-méthyle-2H-1,4-benzoxazine (benoxacor), 5-chloroquinoléine-8-oxy-acétate de (1-méthyle-hexyle) (cloquintocet), 2,2-dichloro-N-(2-oxo-2-(2-propénylamino)-éthyle)-N-(2-propényle)-acétamide (DKA-24), 1,8-anhydride naphtalique, 1-(2,4-dichlorophényle)-5-trichlorométhyle-1H-1,2,4-triazole-3-carboxylate d'éthyle (fenchlorazole éthyle), 2-chloro-4-trifluorométhyle-thiazol-5-carboxylate de phénylméthyle (flurazole), 3-dichloroacétyle-5-(2-furanyle)-2,2-diméthyloxazolidine (furilazole, MON-13900), 4-dichloracétyl-1-oxa-4-aza-spiro[4.5]-décane (AD-67), 2-dichlorométhyle-2-méthyle-1,3-dioxolane (MG-191), 2,2-dichloro-N-(1,3-dioxolane-2-yle-méthyle)-N-(2-propényle)-acétamide (PPG-1292), 2,2-dichloro-N,N-di-2-propénylacétamide (dichlormide), N-(4-méthyle-phényle)-N'-(1-méthyle-1-phényle-éthyle)-urée (dymron), 1-dichloracétylehexahydro-3,3,8a-triméthylpyrrolo[1,2-a]-pyrimidine-6(2H)-one (BAS-145138), N-(2-méthoxy-benzoyle)-4-(méthylaminocarbonylamino)-benzènesulfonamide, 4,5-dihydro-5,5-diphényle-3-isoxazolcarboxylate d'éthyle (isoxadifen-éthyle), 1-(2,4-dichlorophényle)-4,5-dihydro-5-méthyle-1H-pyrazole-3,5-dicarboxylate de diéthyle (mefenpyr-diéthyle) et l'acide 2,4-dichloro-phénoxyacétique (2,4-D) et ses dérivés.

2. Agent suivant la revendication 1, **caractérisé en ce que** l'herbicide provient de la classe de substances actives des sulfonylurées amidosulfuron, azimsulfuron, bensulfuron-méthyle, chlorimuron-éthyle, chlorsulfuron, cinosulfuron, cyclosulfamuron, éthoxysulfuron, flupyrsulfuron-méthyl-sodium, halosulfuronméthyle, imazosulfuron, metsulfuron-méthyle, nicosulfuron, oxasulfuron, primisulfuron-méthyle, prosulfuron, pyrazosulfuron-éthyle, rimsulfuron, sulfosulfuron, thifensulfuron-méthyle, triasulfuron, tribenuron-méthyle ou triflusulfuron-méthyle.

3. Agent suivant la revendication 1 ou 2, **caractérisé en ce que** le composé améliorant la compatibilité avec les plantes cultivées est sélectionné parmi le 5-chloroquinoléine-8-oxy-acétate de (1-méthyle-hexyle) (cloquintocet), le 1-(2,4-dichlorophényle)-5-trichlorométhyle-1H-1,2,4-triazole-3-carboxylate d'éthyle (fenchlorazole éthyle), le 4,5-dihydro-5,5-diphényle-3-isoxazolcarboxylate d'éthyle (isoxadifen-éthyle), le 1-(2,4-dichlorophényle)-4,5-dihydro-5-méthyle-1H-pyrazole-3,5-dicarboxylate de diéthyle (mefenpyr-diéthyle) et l'acide 2,4-dichloro-phénoxyacétique (2,4-D) et ses dérivés.

4. Agent suivant l'une des revendications 1 à 3, **caractérisé en ce que** la substance active (a) représente 0,01 à 1 000 parties en poids, de préférence 0,02 à 500 parties en poids, de manière particulièrement préférée 0,05 à 100 parties en poids d'herbicide (b).

5. Utilisation d'un agent suivant l'une des revendications 1 à 3 pour la lutte contre les plantes indésirables.

**Claims**

1. Composition, **characterized in that** it contains an effective amount of an active compound combination comprising

   (a) the active compound 2-(4-thiocarbamoyl-2-fluoro-5-ethylsulphonylaminophenyl)-4-methyl-5-trifluoromethyl-2,4-dihydro-3H-1,2,4-triazol-3-one
   and
   (b) at least one herbicide from the active compound class of the sulphonylureas
   and also, if appropriate,
   (c) at least one crop-plant-compatibility-improving compound from the following group of compounds:

   α-(1,3-dioxolan-2-yl-methoximino)-phenylacetonitrile (oxabetrinil), α-(cyanomethoximino)-phenylacetonitrile (cyometrinil), 4-chloro-N-(1,3-dioxolan-2-yl-methoxy)-α-trifluoro-acetophenoneoxime (fluxofenim), 4,6-dichloro-2-phenyl-pyrimidine (fenclorim), 4-dichloroacetyl-3,4-dihydro-3-methyl-2H-1,4-benzoxazine (benoxacor), 1-methyl-hexyl 5-chloroquinoxalin-8-oxy-acetate (cloquintocet), 2,2-dichloro-N-(2-oxo-2-(2-propenylamino)-ethyl)-N-(2-propenyl)-acetamide (DKA-24), 1,8-naphthalic anhydride, ethyl 1-(2,4-dichloro-phenyl)-5-trichloromethyl-1H-1,2,4-triazole-3-carboxylate (fenchlorazol-ethyl), phenylmethyl 2-chloro-4-trifluoromethyl-thiazole-5-carboxylate (flurazole), 3-dichloroacetyl-5-(2-furanyl)-2,2-dimethyl-oxazolidine (furilazole, MON-13900), 4-dichloroacetyl-1-oxa-4-aza-spiro[4.5]-decane (AD-67), 2-dichloromethyl-2-methyl-1,3-dioxolane (MG-191), 2,2-dichloro-N-(1,3-dioxolan-2-yl-methyl)-N-(2-propenyl)-acetamide (PPG-1292), 2,2-dichloro-N,N-di-2-propenyl-acetamide (dichlormid), N-(4-methyl-phenyl)-N'-(1-methyl-1-phenyl-ethyl)-urea (dymron), 1-dichloroacetyl-hexahydro-3,3,8a-trimethylpyrrolo[1,2-a]-pyrimidin-6(2H)-one (BAS-145138), N-(2-methoxy-benzoyl)-4-(methylaminocarbonylamino)-benzenesulphonamide, ethyl 4,5-dihydro-5,5-diphenyl-3-isoxazolecarboxylate (isoxadifen-ethyl), diethyl 1-(2,4-dichlorophenyl)-4,5-dihydro-5-methyl-1H-pyrazole-3,5-dicarboxylate (mefenpyr-diethyl) and 2,4-dichlorophenoxyacetic acid (2,4-D) and its derivatives.

2. Composition according to Claim 1, **characterized in that** the herbicide is from the active compound class of the sulphonylureas, amidosulfuron, azimsulfuron, bensulfuron-methyl, chlorimuron-ethyl, chlorsulfuron, cinosulfuron, cyclosulfamuron, ethoxysulfuron, flupyrsulfuron-methyl-sodium, halosulfuron-methyl, imazosulfuron, metsulfuron-methyl, nicosulfuron, oxasulfuron, primisulfuron-methyl, prosulfuron, pyrazosulfuron-ethyl, rimsulfuron, sulfo-sulfuron, thifensulfuron-methyl, triasulfuron, tribenuron-methyl or triflusulfuron-methyl.

3. Composition according to Claim 1 or 2, **characterized in that** the crop plant compatibility-improving compound is selected from 1-methylhexyl 5-chloro-quinoxalin-8-oxy-acetate (cloquintocet), ethyl 1-(2,4-dichlorophenyl)-5-trichloromethyl-1H-1,2,4-triazole-3-carboxylate (fenchlorazol-ethyl), ethyl-4,5-dihydro-5,5-diphenyl-3-isoxazolecarboxylate (isoxadifen-ethyl), diethyl 1-(2,4-dichlorophenyl)-4,5-dihydro-5-methyl-1H-pyrazole-3,5-dicarboxylate (mefenpyr-diethyl) and 2,4-dichlorophenoxyacetic acid (2,4-D) and its derivatives.

4. Composition according to any of Claims 1 to 3, **characterized in that** from 0.01 to 1000 parts by weight, preferably from 0.02 to 500 parts by weight, particularly preferably from 0.05 to 100 parts by weight of herbicide (b) are present per active compound (a).

5. Use of a composition according to any of Claims 1 to 3 for controlling undesirable plants.